Europäisches Patentamt

European Patent Office

Office européen des brevets

(19)

(11) Numéro de publication : **0 149 410 B1**

(12)

# FASCICULE DE BREVET EUROPÉEN

(45) Date de publication du fascicule du brevet :
24.01.90

(21) Numéro de dépôt : 84440054.9

(22) Date de dépôt : 19.11.84

(51) Int. Cl.⁵ : **B 29 C 65/34, G 05 D 23/275**

(54) **Procédé pour le contrôle du temps de soudage.**

(30) Priorité : 19.12.83 FR 8320429

(43) Date de publication de la demande :
24.07.85 Bulletin 85/30

(45) Mention de la délivrance du brevet :
24.01.90 Bulletin 90/04

(84) Etats contractants désignés :
AT BE CH DE GB IT LI LU NL SE

(56) Documents cités :
EP--A-- 0 093 821
CH--A-- 437 755
FR--A-- 1 260 490
FR--A-- 2 287 101
FR--A-- 2 345 652
GB--A-- 873 122
US--A-- 2 524 886
US--A-- 2 870 297
US--A-- 3 026 392
US--A-- 3 046 536
US--A-- 3 423 714

(73) Titulaire : INNOVATION GENERALE en abrégé
"INNOGE"
"Les Industries" Rue de l'Industrie
Monaco 98000 (MC)

(72) Inventeur : Grandclement, Gérard
89 avenue du 3 Septembre
F-06320 Cap d'Ail (FR)

(74) Mandataire : Bossard, Jacques-René
Cabinet MEYER & COURTASSOL Bureau EUROPE 20
Place des Halles
F-67000 Strasbourg (FR)

## Description

La présente invention concerne la mise en œuvre des raccords électrosoudables pour tubes en matière plastique. Elle vise plus spécialement un procédé et un dispositif assurant dans cette mise en œuvre la durée de soudure optimale en fonction du diamètre des tubes.

Par « raccord » on désigne ici, aussi bien un manchon servant à relier les extrémités de deux tubes dans le prolongement l'un de l'autre, qu'une prise pratiquée transversalement sur un autre tube, ou que tout autre dispositif dans lequel un certain nombre d'éléments tubulaires doivent être associés entre eux.

Pour la clarté de l'exposé on se référera dans la suite au cas particulier d'un manchon tel que défini ci-dessus, étant entendu qu'il ne s'agit que d'un exemple d'illustration de la technique de l'invention.

Il est connu (EP-A-93821) pour réunir deux tubes en matière plastique, d'utiliser un manchon de même matière, dans lequel sont enfilés les deux tubes, c'est-à-dire jouant le rôle de raccord, et dans la zone superficielle interne duquel est noyé un enroulement dont les extrémités sont réunies à une source de courant électrique. Quand cette source est excitée, le passage du courant dans l'enroulement détermine la fusion de la matière dans la zone superficielle interne du manchon et dans la zone superficielle externe des tubes qui y sont enfilés. Ces deux zones subissent au surplus une certaine dilatation thermique, de sorte que les surfaces en fusion viennent en contact intime, ce qui assure leur soudure au refroidissement, avec formation d'un bloc unitaire.

Ce processus simple comporte cependant une difficulté de contrôle, car il n'est pas visible de l'extérieur, mais au contraire, constitue un phénomène progressif, dont l'aboutissement est la formation d'un bloc unitaire entre les tubes et leur manchon de raccordement, mais que ce phénomène peut être suivi par des indices physiques, à savoir la modification des propriétés intrinsèques de la matière plastique, et notamment de son volume, de sa conductibilité thermique ou de sa dureté.

En effet, quand la source de courant électrique de soudure est excitée, le passage du courant dans l'enroulement détermine une succession de faits :

les spires de l'enroulement étant noyées dans la matière du manchon la chaleur développée par le passage du courant provoque l'échauffement de la matière dans leur voisinage immédiat, puis de proche en proche sa fusion et ses dilatations jusqu'à sa surface, qui va venir au contact de la surface extérieure du tube, sur laquelle elle exercera une pression croissante :

à son tour, la matière du tube entre en fusion, qui assure la soudure sous pression du tube avec le manchon ;

si le courant n'est pas coupé en ce point, la dilatation de la matière en fusion provoquera un accroissement de pression dans la zone de soudure, car les zones latérales de chaque côté de l'enroulement demeurent froides pour éviter l'échappement de la matière et assurer l'établissement de la pression de soudure.

C'est donc par exemple grâce au contrôle du volume de la matière que l'on peut déclencher l'arrêt du passage du courant au moment où cet indice ayant atteint une valeur déterminée, il est certain que la soudure est achevée, la durée optimale de passage du courant étant fonction du diamètre du manchon la tension étant supposée constante.

De même, cette durée peut être contrôlée par la mesure de la conductibilité thermique de la matière ou son degré de ramollissement.

Il existait donc un besoin de moyens permettant d'assurer un contrôle automatique du temps de soudage de ces raccords et la présente invention vise de tels moyens.

Selon l'invention, le passage du courant est automatiquement interrompu dès que les propriétés de la matière du raccord des tubes correspondant à la soudure optimale. A cet effet, selon un premier mode de mise en œuvre de l'invention, c'est la matière en fusion elle-même qui, en se dilatant thermiquement, arrive au contact d'un composant électromécanique ou électronique qui intervient alors pour interrompre le passage du courant.

Selon un second mode de mise en œuvre de l'invention, c'est la conductibilité thermique de la matière qui est prise comme variable, et qui, quand elle a atteint la valeur correspondant au degré de ramollissement ou de fusion voulue détermine soit, l'envoi, par une thermosonde, d'une information d'arrêt à la source de courant, soit la coupure de courant par rupture, par fusion, d'une zone sensible à la chaleur de l'enroulement.

Selon un troisième mode de mise en œuvre, c'est un élément sensible à la dureté ou à la consistance de la matière qui, en s'enfonçant dans cette matière ramollie, détermine le fonctionnement d'un composant électro-mécanique ou électronique.

D'autres modes de mises en œuvre peuvent encore être imaginés, en restant dans le cadre de l'invention, dès lors qu'une propriété liée au ramollissement de la matière aura été captée et utilisée comme information transmise à un système d'arrêt du courant de soudure.

L'invention vise donc en premier lieu un procédé pour le contrôle du temps de soudage d'un manchon électrosoudable, ce procédé consistant à utiliser les variations de propriétés de la matière plastique en fusion pour agir, au moment où une de ces propriétés atteint son degré optimal, sur un composant électromécanique ou électronique qui arrête le passage du courant électrique.

Dans la mise en pratique du premier mode de réalisation de l'invention, on utilisera l'écoulement de la matière en fusion par un trou radial pratiqué dans la paroi du manchon. Au moment de l'opération de soudage, la matière en fusion provenant de la zone interne du manchon est refoulée par ce trou, et affleure la surface externe du manchon. Ce phénomène bien connu a été exploité pour tenter d'exercer un contrôle visuel de l'opération, en plaçant un « flotteur » dans le trou, mais un tel moyen est trop rustique pour constituer un véritable contrôle rigoureux. Selon l'invention, un micro-interrupteur est placé à l'orifice du trou, de matière telle qu'il est actionné par la matière en fusion à l'instant même où elle parvient à son contact, ce qui réalise un contrôle réellement rigoureux.

L'invention vise donc également un dispositif pour le contrôle du temps de soudage d'un manchon électrosoudable, du type dans lequel un trou est percé radialement dans la paroi du manchon jusqu'au voisinage de l'enroulement, la matière en fusion s'écoulant par ce trou jusqu'au voisinage de la face externe du manchon, ce dispositif consistant en un élément électro-mécanique ou électronique placé au voisinage de l'embouchure du trou et intervenant pour couper le courant dès qu'il est atteint par ladite matière en fusion.

Bien entendu, le diamètre du trou doit être choisi en fonction de la dimension du manchon de manière que la quantité de matière en fusion qui y remonte soit telle qu'elle atteigne l'élément de contrôle au moment précis où le soudage est optimal et où il faut interrompre le passage du courant.

Les dessins annexés illustrent la mise en œuvre de ce premier mode de réalisation du procédé dans deux applications distinctes. Sur ce dessin

la figure 1 illustre l'application de l'invention au raccord de deux tubes coaxiaux par un manchon,

la figure 2 illustre l'application de l'invention à la pose d'un tube de dérivation sur une conduite principale,

la figure 2a est une coupe suivant II-II de la figure 2,

et la figure 3 illustre schématiquement la commande du circuit de soudage par la mise en œuvre de ce procédé.

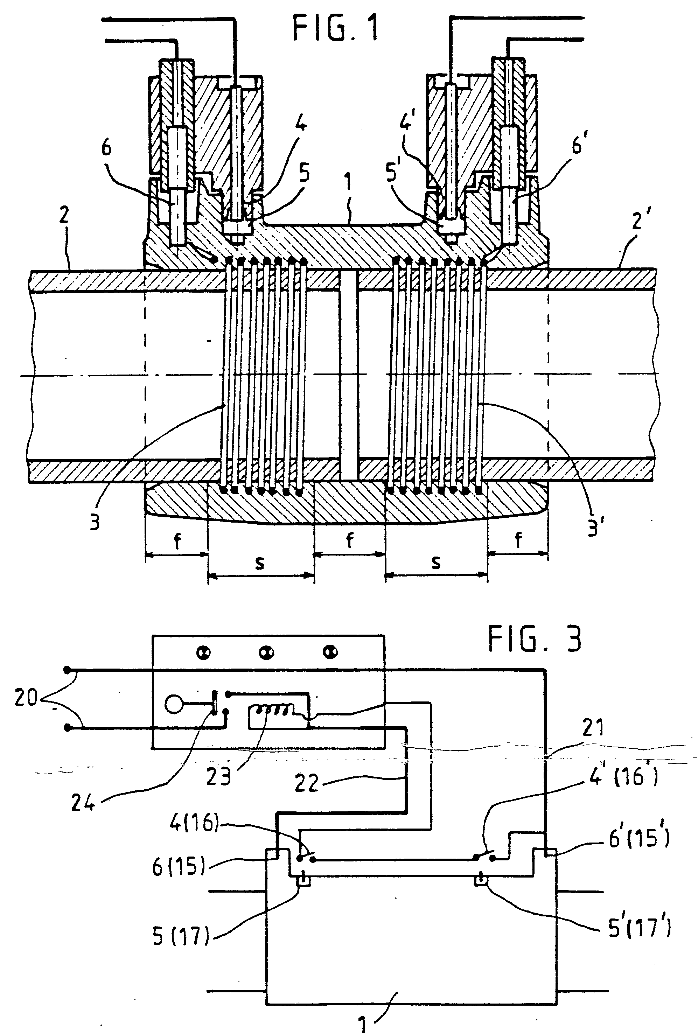

Si l'on se réfère d'abord à la figure 1, on y a représenté un manchon 1 en matière thermoplastique, par exemple du polyéthylène haute densité, destiné à raccorder deux tubes coaxiaux 2-2', par exemple en polyéthylène, d'un diamètre externe très légèrement inférieur au diamètre interne du manchon 1, les deux tubes 2-2' sont introduits dans le manchon 1 de manière généralement symétrique, de sorte que leurs extrémités sont situées face à des zones du manchon dans lesquelles sont noyés des enroulements 3-3' reliés ensemble par des bornes 6-6' à une source d'énergie électrique, comme il est illustré à la figure 3.

Selon l'invention, le circuit d'alimentation du couple d'enroulement 3-3', une fois fermé par l'opérateur, comme il sera exposé à propos de la figure 3, est automatiquement coupé dès que le soudage est effectué, grâce à un circuit de contrôle commandé par deux micro-interrupteurs désignés par 4-4' disposés dans des puits 5-5' voisins des bornes 6-6', et creusés dans la paroi du manchon 1 jusqu'au voisinage des enroulements 3-3'.

Quand le processus de fusion-dilatation rappelé plus haut se déroule, la matière en fusion du manchon, sous l'effet de la pression de dilatation, pénètre dans le fond de chaque puits 5-5', et par poursuite de cette dilatation, monte dans ce puits jusqu'à venir exercer sur chaque micro-interrupteur 4-4' une pression qui, repoussant le plongeur de ce micro-interrupteur, provoque sa manœuvre de coupure du courant d'excitation des enroulements, en interrompant l'opération de soudure qui est ainsi achevée.

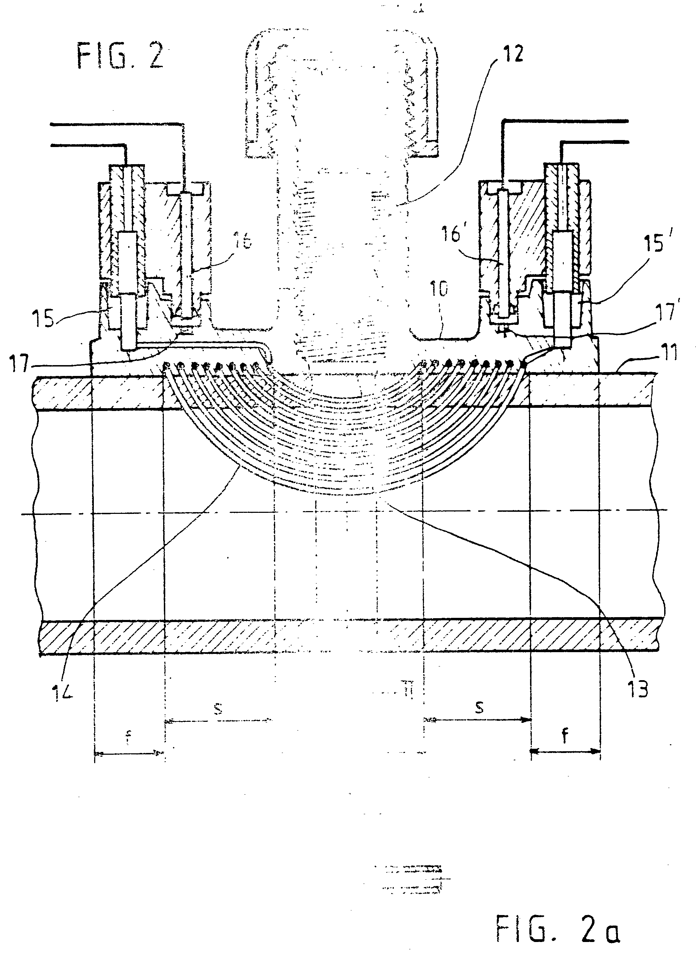

Le processus est le même dans le cas de l'application des figures 2-2a, dans lesquelles, au lieu d'un manchon de raccord de deux tubes coaxiaux, la soudure est pratiquée sur une selle 10 recouvrant tout ou parties d'un tube 11 et servant à pratiquer dans ce tube une dérivation. A cet effet, la selle 10 porte un tube 12 fileté intérieurement pour permettre, grâce à un poinçon fileté (non représenté), de percer un orifice 13 dans la paroi du tube 11 face au tube 12.

La selle 10 comporte un enroulement 14, galbé pour s'adapter à la forme cintrée de la selle, et excité par un circuit sur les bornes principales 15-15', tandis que des micro-interrupteurs 16-15' sont logés dans des puits 17-17' de façon semblable aux micro-interrupteurs 4-4' logés dans les puits 5-5' de la figure 1. La mise en œuvre du procédé est semblable : dès que la matière de la selle et du tube a atteint le degré de fusion voulu, elle pénètre dans les puits 16-16' et déclenche les micro-interrupteurs 16-16' en coupant les circuits d'alimentation de l'enroulement 14, ce qui met fin au processus de soudage.

Bien entendu, deux applications seulement du procédé ont été décrites, mais il est évident que d'autres variantes seront aisées à concevoir, notamment faisant intervenir la température proprement dite de la matière en fusion.

La figure 3 illustre très schématiquement le montage électrique tel qu'il vient d'être décrit. Depuis un générateur basse tension 20, des conducteurs 21-22 vont alimenter des bornes principales 6-6' (15-15') de l'enroulement de soudure. Sur le conducteur 22 est interposé un système de contrôle comportant un relais 23, dont l'enclenchement se fait manuellement par un bouton poussoir 24, et le déclenchement se fait par les micro-4-4' (16-16') dont les palpeurs sont sensibles à la pression de la matière en fusion dans les puits 5-5' (17-17') pratiqués dans le manchon 1 (ou la selle 10).

Selon les variantes rentrant dans le cadre de l'invention, ces palpeurs peuvent également être sensibles à la conductibilité thermique ou à la dureté de la matière, et le système de contrôle du circuit peut être commandé, soit uniquement à partir du volume de la matière, soit, puisqu'il y a deux puits dans chaque manchon à partir de la dureté d'un côté et du volume de l'autre.

## Revendications

1. Procédé pour le contrôle du temps de soudage d'un raccord électrosoudable avec deux tubes (2, 2') à assembler, caractérisé en ce qu'il consiste à capter les variations d'une propriété de la matière à souder de manière qu'au moment où la soudure est achevée, la valeur de cette propriété est utilisée comme information envoyée par le capteur pour commander la coupure du courant de soudage.

2. Procédé selon la revendication 1, caractérisé en ce que la propriété dont sont captées les variations est le volume, la matière en se dilatant dans un puits (5, 17) percé dans la paroi du raccord venant actionner un micro-interrupteur (4, 16) disposé à l'embouchure de ce puits.

3. Procédé selon la revendication 1, caractérisé en ce que la propriété dont sont captées les variations est la conductibilité thermique, cette dernière étant captée par une thermosonde disposée à l'intérieur d'un puits (5, 17) pratiqué dans la paroi du raccord.

4. Procédé selon la revendication 1, caractérisé en ce que la propriété dont sont captées les variations est la consistance ou dureté de la matière, le degré de pénétration d'une pointe dans la matière en ramollissement déterminant l'enfoncement de cette pointe, le déplacement de cette pointe étant capté et transmis comme information à machine de soudage.

5. Dispositif pour le temps de soudage d'un raccord électro-soudable sur deux tubes (2, 2') à assembler, du type dans lequel un puits (5, 17) est percé radialement dans la paroi du raccord jusqu'au voisinage de l'enroulement, caractérisé en ce que, dans ce puits ou au voisinage de son embouchure, est disposé un élément capteur des variations d'une propriété de la matière dans la zone de ramollissement, les informations provenant de ce capteur étant transmises à la machine de soudage, de manière telle que pour une valeur déterminée de ladite propriété correspondant à l'achèvement du soudage, ladite information correspondante détermine la coupure du courant sur la machine.

6. Dispositif selon la revendication 5, caractérisé en ce que l'élément capteur est un micro-interrupteur (4, 16) placé à l'embouchure dudit puits de manière à être actionné par la matière en fusion, la propriété utilisée étant le volume de la matière.

7. Dispositif selon la revendication 5, caractérisé en ce que l'élément capteur est un dispositif sensible à la conductibilité thermique telle qu'une thermosonde placée à l'intérieur du puits, la propriété utilisée étant la conductibilité thermique de la matière.

8. Dispositif selon la revendication 5, caractérisé en ce que l'élément capteur est une pointe s'enfonçant dans la matière dans le puits, la propriété utilisée étant la consistance de la matière.

## Claims

1. Process for checking the welding time of an electrically weldable joint with two tubes (2, 2') to be assembled, characterized in that it consists of sensing the variations of one property of the material to be welded, in such a way that at the instant when welding is completed, the value of this property is used as information supplied by the sensor for controlling the interruption of the welding current.

2. Process according to claim 1, characterized in that the property, whose variations are sensed is the volume, the material by expanding in a hole (5, 17) made in the wall of the joint actuating a microswitch (4, 16) located at the mouth of said hole.

3. Process according to claim 1, characterized in that the property, whose variations are sensed is the thermal conductivity, the latter being sensed by a thermoprobe located within a hole (5, 17) made in the wall of the joint.

4. Process according to claim 1, characterized in that the property, whose variations are sensed is the consistency or hardness of the material, the degree of penetration of a tip into the softening material determining the sinking in of said tip, the displacement of the tip being sensed and transmitted as information to the welding machine.

5. Apparatus for the time of welding of an electrically weldable joint to two tubes (2, 2') to be assembled, of the type in which a hole (5, 17) is made radially in the wall of the joint up to the vicinity of the winding, characterized in that, in said hole or in the vicinity of its mouth is provided a sensor of the variations of a property of the material in the softening zone, the information from said sensor being transmitted to the welding machine, in such a way that for a given value of said property corresponding to the completion of the weld, the corresponding information determines the interruption of the current on the machine.

6. Apparatus according to claim 5, characterized in that the sensor is a microswitch (4, 16) placed at the opening of said hole so as to be actuated by the melting material, the property used being the volume of the material.

7. Apparatus according to claim 5, characterized in that the sensor is a device sensitive to the thermal conductivity, such as a thermoprobe placed within the hole, the property used being the thermal conductivity of the material.

8. Apparatus according to claim 5, characterized in that the sensor is a tip which is embedded in the hole, the property used being the consistency of the material.

## Patentansprüche

1. Verfahren zur Regelung der Schweißzeit einer elektrisch schweißfähigen Kupplung mit zwei zu verbindenden Rohren (2, 2'), dadurch gekennzeichnet, daß es auf dem Erfassen der Änderungen einer Eigenschaft des zu verschweißenden Materials beruht, so daß im Moment, da die Verschweißung vollendet ist, der Wert dieser Eigenschaft als durch den Wertgeber ausgegebene Information verwendet wird, um das Abschalten des Schweißstroms zu steuern.

2. Verfahren nach Anspruch 1, dadurch gekennzeichnet, daß die Eigenschaft, deren Änderungen erfaßt werden, das Volumen ist, wobei das in einem in die Wand der Kupplung gebohrten Sackloch (5, 17) sich ausdehnende Material einen an der Mündung dieses Sacklochs angeordneten Mikroschalter (4, 16) betätigt.

3. Verfahren nach Anspruch 1, dadurch gekennzeichnet, daß die Eigenschaft, deren Änderungen erfaßt werden, die thermische Leitfähigkeit ist, wobei letztere durch eine im Inneren eines in der Wand der Kupplung ausgearbeiteten Sacklochs (5, 17) angeordnete Thermosonde erfaßt wird.

4. Verfahren nach Anspruch 1, dadurch gekennzeichnet, daß die Eigenschaft, deren Änderungen erfaßt werden, die Konsistenz oder Härte des Materials ist, daß der Grad des Eindringens einer Spitze in das im Erweichen befindliche Material die Eindringtiefe dieser Spitze bestimmt und daß die Verlagerung dieser Spitze erfaßt sowie als Information zur Schweißmaschine übertragen wird.

5. Vorrichtung für die Schweißzeit einer elektrisch schweißfähigen Kupplung auf zwei zu verbindenden Rohren einer Bauart, wobei ein Sackloch (5, 17) radial in die Wand der Kupplung bis in die Nachbarschaft der Wicklung gebohrt ist, dadurch gekennzeichnet, daß in diesem Sackloch oder in der Nähe seiner Mündung ein Änderungen in einer Eigenschaft des Materials im Bereich dessen Erweichung erfassender Wertgeber angeordnet ist und daß die vom Wertgeber ausgehenden Informationen zur Schweißmaschine übertragen werden derart, daß für einen in Übereinstimmung mit der Vollendung der Verschweißung festgelegten Wert der genannten Eigenschaft die entsprechende Information die Abschaltung des Stroms an der Maschine bestimmt.

6. Vorrichtung nach Anspruch 5, dadurch gekennzeichnet, daß der Wertgeber ein Mikroschalter (4, 16) ist, der an der Mündung des genannten Sacklochs derart angeordnet ist, daß er durch das im Schmelzen befindliche Material betätigt wird, wobei die verwendete Eigenschaft das Volumen des Materials ist.

7. Vorrichtung nach Anspruch 5, dadurch gekennzeichnet daß der Wertgeber eine auf die thermische Leitfähigkeit ansprechende Einrichtung ist, wie eine Thermosonde, die im Inneren des Sacklochs angeordnet ist, wobei die verwendete Eigenschaft die Wärmeleitfähigkeit des Materials ist.

8. Vorrichtung nach Anspruch 5, dadurch gekennzeichnet, daß der Wertgeber eine Spitze ist, die in das im Sackloch befindliche Material eindringt, wobei die verwendete Eigenschaft die Konsistenz des Materials ist.

FIG. 1

FIG. 3

FIG. 2

FIG. 2a